# EUROPEAN PATENT SPECIFICATION

(11) **EP 0 370 766 B1**
(45) Date of publication and mention of the grant of the patent: **05.07.1995**
(21) Application number: 89312076.6
(22) Date of filing: 21.11.1989
(51) Int. Cl.: G06F 7/24, G06K 9/62

(54) **Sorting method and apparatus**
Sortierverfahren und -gerät
Méthode et appareil de triage

(30) Priority: 25.11.1988 JP 297293/88
(43) Date of publication of application: 30.05.1990
(73) Proprietor: CANON KABUSHIKI KAISHA, Tokyo (JP)
(72) Inventor: Yagasaki, Toshiaki, Hino-shi Tokyo (JP); Ueno, Shugoro, Ohta-ku Tokyo (JP); Tanaka, Tetsuomi, Yokohama-shi Kanagawa-ken (JP)
(74) Representative: Beresford, Keith Denis Lewis

(56) References cited:
- US-A- 4 679 139
- IEEE TRANSACTIONS ON COMPUTERS, vol. C-35, no. 12, December 1986, NEW YORK US pages 1071 - 1077; L. RASCHID ET AL.: 'A special-function unit for sorting and sort-based database operations'
- PATENT ABSTRACTS OF JAPAN, vol. 6, no. 88 (P-118)26 May 1982 & JP-A-57 025 079 ( FUJITSU LTD ) 9 February 1982

## Description

### BACKGROUND OF THE INVENTION

### Field of the Invention:

This invention relates to a sorting method and apparatus for sorting numerical data inputted in a time series and identifiers corresponding to the numerical data in the order of the size of the numerical data.

### Description of the Prior Art:

In a character recognition apparatus according to the prior art, an input image pattern obtained by an image pick-up device generally is subjected to a distance computation (comparison) with respect to standard patterns of respective characters stored beforehand in an internal memory, the one standard pattern which most closely approximates the input image pattern (namely the standard pattern having the shortest distance) is extracted based on the results of the computation, and a character code corresponding to the extracted standard pattern is outputted as the results of character recognition of the input image pattern.

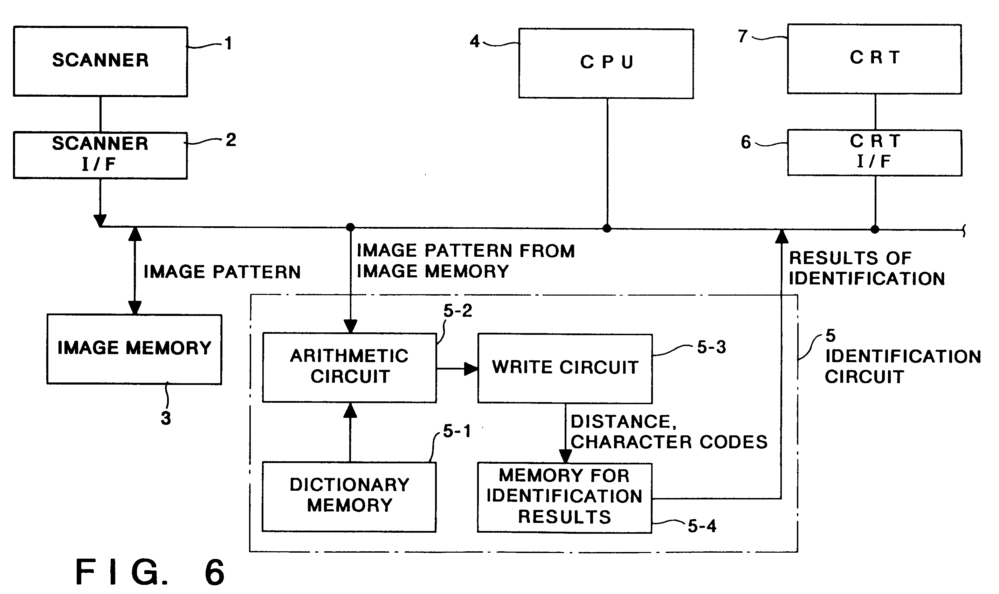

Fig. 6 illustrates an example of the simplified arrangement of such a conventional character recognition apparatus.

As shown in Fig. 6, an image pattern (input image pattern) enters from a scanner (an image pick-up device or image reader) 1 via a scanner interface 2 and is written in an image memory 3 by a central processing unit (CPU) 4.

Next, the input image pattern stored in the image memory 3 is read out under the control of the CPU 4 and sent to an arithmetic circuit 5-2 of an identification circuit 5.

A dictionary memory 5-1 stores various character codes and standard image patterns corresponding to these character codes. The arithmetic circuit 5-2 performs a distance computation to compute the distance between the input image pattern from the image memory 3 and the standard image patterns in the dictionary memory 5-1.

This distance computation is performed by comparing each of the plurality of standard image patterns with the single input image pattern, thereby obtaining computation results (distance data) regarding each standard image pattern.

A memory 5-4 for storing the results of identification constitutes a sorting circuit. The memory 5-4 stores the identifier of the relevant standard pattern, namely the character code, at an address corresponding to the results of distance computation (distance data) received from the arithmetic circuit 5-2 via a write circuit 5-3. The write circuit 5-3 also constitutes the sorting circuit.

The character codes stored in the memory 5-4 are read out by the CPU 4 in the order of the addresses, namely in order from the smaller to the larger distances. These character codes are displayed on a CRT display unit 7 via a CRT interface (I/F) 6. The smaller the distance, the closer the standard image pattern of the corresponding code approximates the input image pattern.

The factual operation of this sorting circuit will now be described in simple terms.

When an image pattern of one character initially enters from the scanner 1, this input image pattern is sent to the arithmetic circuit 5-2 via the image memory 3. The arithmetic circuit 5-2 computes the distance between this input image pattern and the standard image pattern of the first character, e.g., "A", stored in the dictionary memory 5-1, and the write circuit 5-3 stores the character code of the character "A" at an address in the memory 5-4 corresponding to the distance data, which is the result of distance computation.

Next, the arithmetic circuit 5-2 reads the standard image pattern of the next character "B" out of the dictionary memory 5-1 and performs a distance computation with regard to the input image pattern, just as in the case of the character "A". The write circuit 5-3 stores the character code of the character "B" at an address in the memory 5-4 corresponding to the distance data regarding the standard image pattern of character "B".

By thenceforth repeating this procedure in successive fashion, character codes of the standard image patterns are successively stored at addresses of the memory 5-4 corresponding to the distances between the standard image patterns and the input image pattern. Thus, computations of the distance between the input image pattern and the standard image patterns corresponding to all of the character codes stored in the dictionary memory 5-1 end. When the results are stored at the addresses of the memory 5-4 that correspond to the respective items of distance data, the CPU 4 reads the character codes out of the memory 5-4 sequentially in order starting from the smallest address of the memory, i.e., starting from the character code of the character best approximating the input image pattern. These character codes or the stored character patterns themselves are displayed on the CRT display unit 7. In this way the operator is informed of the candidates for character recognition in accordance with the size of the computed distances. This is done by displaying the candidates in the order in which they best approximate the input image pattern, by way of example

In this type of conventional sorting circuit used in a character recognition apparatus, the arrangement is such that the character code of the standard image pattern having the shortest distance with respect to one input image pattern is stored in memory with the distance data thereof serving as the address, as mentioned above. Therefore, in a case where distance data regarding a character "A" and a character "F" in the foregoing example indicates the same value, the content (the character "A" code data) stored at the address corresponding to the distance data relative to the standard image pattern of character code "A" computed at a preceding point in time will be rewritten as the character "F" code data which has the same distance data (address) computed at a later point in time. Consequenthly, the operator cannot be informed of the fact that two or more standard image patterns of character codes ("A" and "F" in this case) have the same distance data, i.e., all of them approximate the input image pattern in the same extent. Thus, the operator is informed of the fact that only "F", which is the result of the latter computation, is the character best approximating the input image pattern even though both "A" and "F" approximate it best. As a result, the conventional sorting circuit of a character recognition apparatus is defective in that the operator may not recognize a character correctly.

In order to solve this problem, consideration has been given to providing addresses of the identification storage memory 5-4 that correspond to all distance data regarding a single input image pattern with a plurality of storage areas (the maximum number of which would be the number of character codes stored in the dictionary memory 5-1) respectively. However, in a case where there are several hundred to several thousand character codes, the capacity of the memory 5-4 would have to be enormous (i.e., a memory capacity equivalent to the number of addresses multiplied by the number of character codes). This would give rise to new drawbacks, namely a higher cost for the apparatus and a longer memory access time.

In US-A-4 679 139, using a sub-keyfield value of a record, a row of a Tail RAM is selected and a current record number is loaded into the selected row of the Tail RAM. A row of a Head RAM is selected using the current record number, and the current record number is stored into the selected row of the Head RAM. If the selected row of the Tail RAM contained a record number (i.e. a previously processed record which had the same sub-keyfield value as the current record), then the former record number in the Tail RAM is loaded into a row of the Head RAM which is selected using the current record number, and then the current record number is loaded into the selected row of the Tail RAM. In this way, however, it is necessary to write to two memories (Tail RAM and Head RAM) when one record is stored.

An embodiment of the present invention provides a sorting method and apparatus which solve the aforementioned problems.

Accordingly the present invention as defined in claim 1 provides a sorting method for sorting identification codes having associated numeric information in accordance with the numeric information, said method being characterised in that it comprises the steps of: for each input identification codes and associated numeric information:
(A) reading a first data from a first memory at a first address corresponding to the input numeric information;
(B) storing the identification code in the first memory at the first address when the first data is equal to 0;
(C) reading a second data from a second memory at a second address corresponding to the first data when the first data is not equal to 0;
(D) storing the identification code in the second memory at the second address when the second data is equal to 0;
(E) reading data from the second memory at an address corresponding to the immediately preceding read data from the second memory when the read data is not equal to 0;
(F) repeating the step (E) until the read data is found to be equal to 0; and
(G) storing the identification code in the second memory at an address corresponding to the read data.

The corresponding sorting apparatus is defined in claim 4.

Thus the embodiment of the present invention just described provides a sorting method and apparatus through which the required memory capacity can be reduced and processing time greatly curtailed.

The embodiment of the present invention also provides a sorting method and apparatus which make it possible for identification codes corresponding to numeric data to be stored at high speed in the order of the numeric data, and the identification codes stored in correspondence with numeric data to be read and outputted in the order of the numeric data.

Thus the embodiment of the present invention just described provides an inexpensive sorting method and apparatus which make it possible to store all identification codes having the same numeric value data and to read out the identification codes corresponding to the numeric data at high speed in the order of the size of the numeric data.

Other features and advantages of the present invention will be apparent from the following description taken in conjunction with the accompanying drawings, in which like reference characters designate the same or similar parts throughout the figures thereof.

### BRIEF DESCRIPTION OF THE DRAWINGS

Fig. 1 is a block diagram illustrating the basic construction of an embodiment according to the present invention;
Fig. 2 is a circuit diagram showing the detailed construction of the embodiment of the invention;
Fig. 3 is an explanatory view showing the principle of sorting in the embodiment of the invention;
Figs. 4 and 5 are flowcharts showing a control procedure executed by a CPU shown in Fig. 2; and
Fig. 6 is a block diagram showing the construction of a character recognition apparatus to which a conventional sorting circuit is applied.

### DESCRIPTION OF THE PREFERRED EMBODIMENT

An embodiment of the present invention will now be described in detail with reference to the drawings.

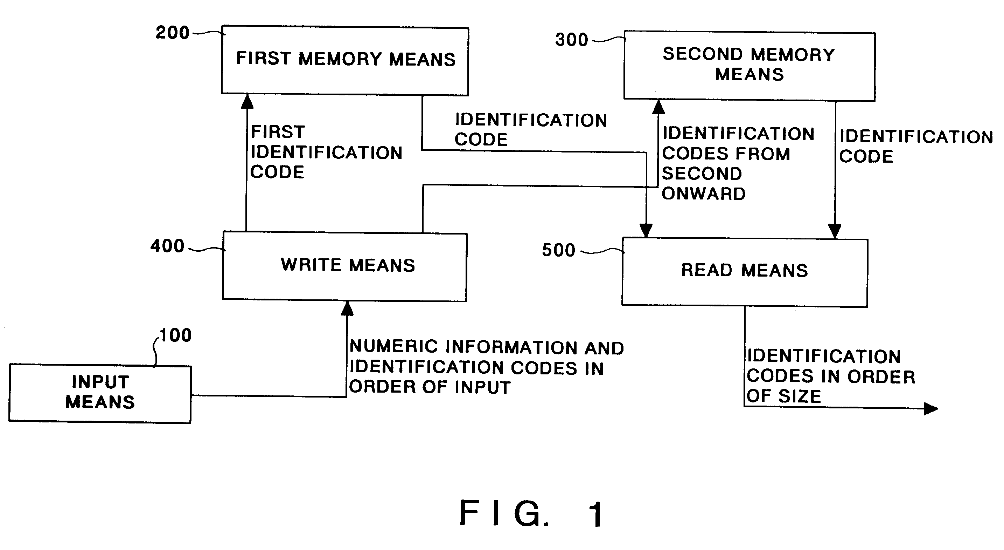

Fig. 1 is a functional block diagram showing the basic construction of an embodiment of the present invention.

The arrangement shown in Fig. 1 includes input means 100 for inputting numeric information to be sorted and identification codes assigned to this numeric information, first memory means 200 for storing the identification codes, with the numeric information serving as addresses, and second memory means 300 for storing identification codes from a second identification code onward having numeric information of the same value, with the abovementioned identification codes serving as addresses. The arrangement further includes writing means 400 for writing identification codes in the first memory means 200, with the numeric information serving as the addresses. In a case where a plurality of identification codes for which the relevant numeric information is the same are entered, the writing means 400 writes the identification codes from the second onward in the second memory means 300 at addresses that correspond to the previously entered identification codes. Also provided is reading means 500 for reading out identification codes in the order of the sizes of the addresses of the first memory means 200. When the first identification code has been stored at the address of the first memory means 200, the reading means 500 reads an identification code out of the second memory means 300, with the stored identification code serving as the read starting address of the second memory means 300. Then, with the identification code read out of this address serving as the next read address of the second memory 300, the reading means 500 reads out of the second memory 300 the identification codes, from the second identification code onward, that have the same numeric information as this identification code.

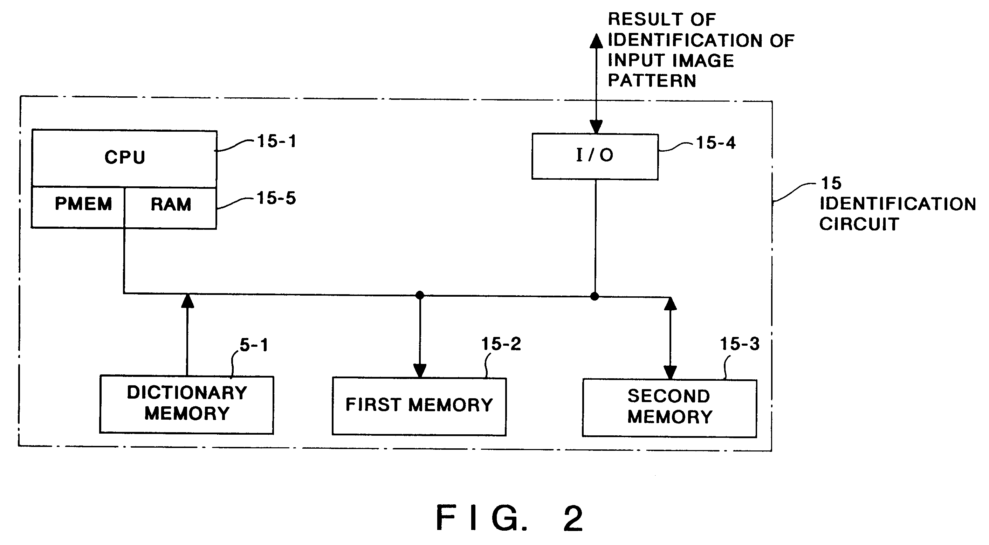

Fig. 2 is a block diagram showing an example of the construction of an identification circuit 15 in a character recognition apparatus to which the present invention is applied. Other portions are similar to the prior-art example of Fig. 6 and therefore are deleted.

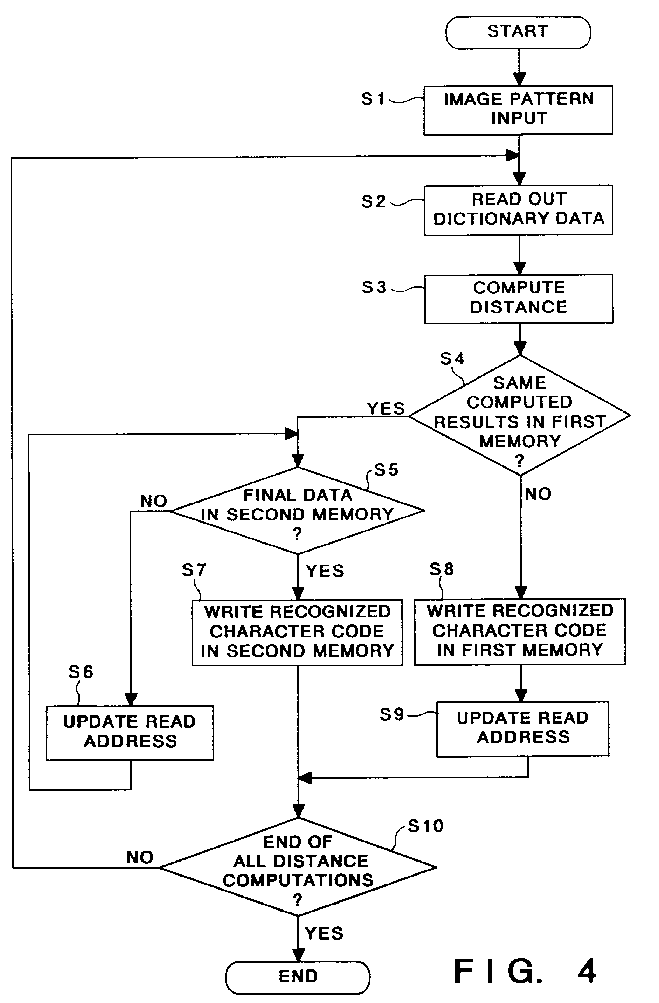

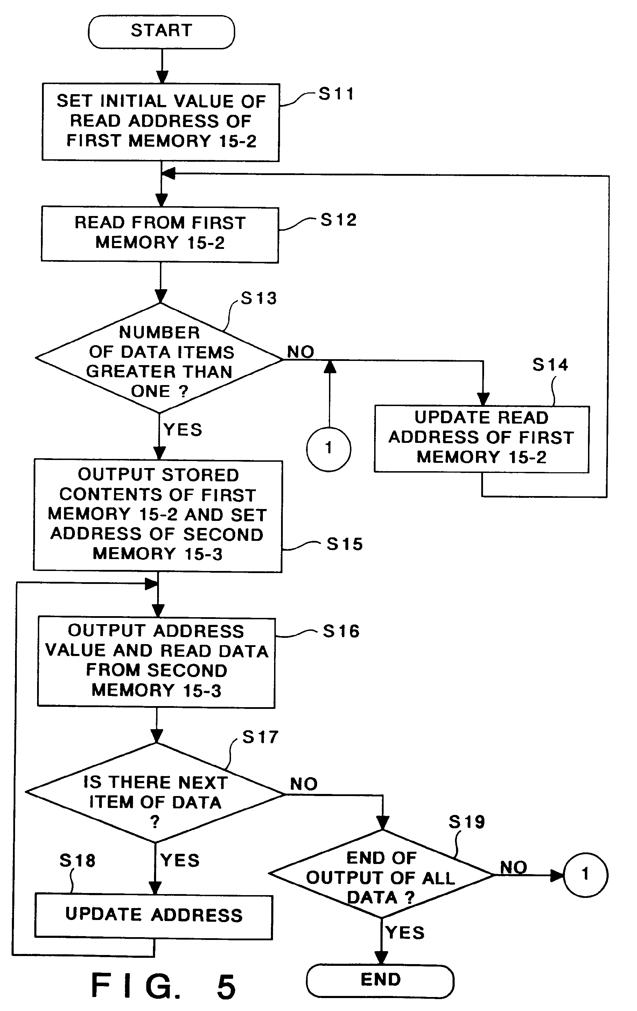

As shown in Fig. 2, numeral 15-1 represents a central processing unit (CPU) corresponding to the input means, writing means and reading means of the present invention. The CPU 15-1 performs a distance computation to determine the distance between an input image pattern which enters from an interface (I/O) 15-4 and standard image patterns stored in the dictionary memory 5-1. The dictionary memory 5-1 is similar to that of the prior-art example shown in Fig. 6. The CPU 15-1 has a program memory (PMEM) which stores a control procedure indicated by the flowcharts of Figs. 4 and 5, and a RAM 15-5 which stores addresses.

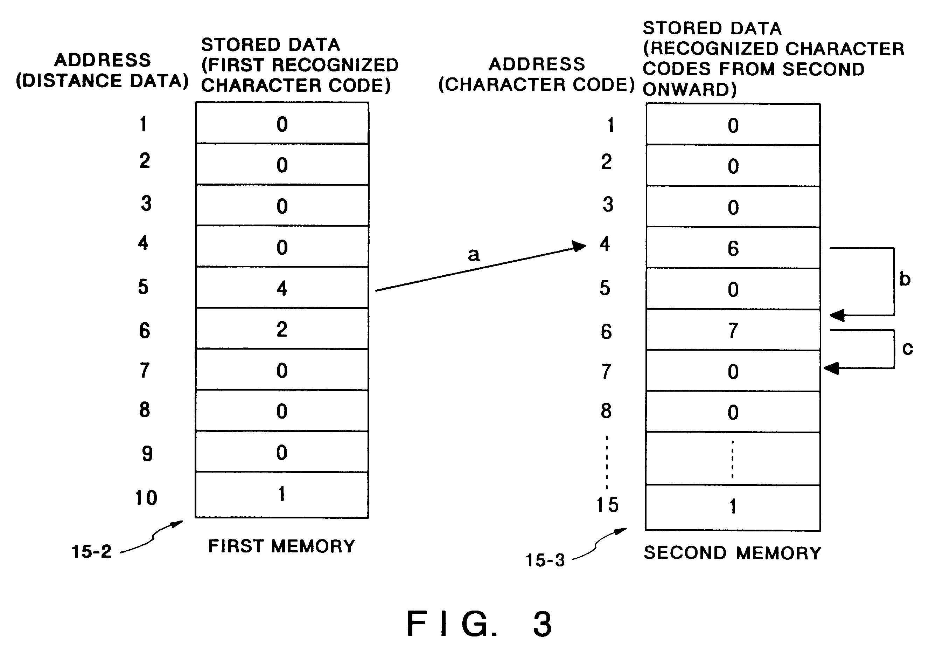

Numeral 15-2 denotes a first memory (first memory means) in which the results (distance data) of the distance computation performed by the CPU 15-1 serve as addresses, as shown in Fig. 3. Identifiers (i.e., character codes) of the standard image patterns that have undergone the distance computation are stored at addresses which correspond to the results of the distance computation. Numeral 15-3 denotes a second memory (second memory means) in which the abovementioned character codes serve as addresses, as shown in Fig. 3. In a case where a plurality of identical results of distance computation are obtained, character codes generated from the second character code onward are stored.

Based on the results of computing the distance between the input image pattern and the standard image patterns from the dictionary memory 5-1, the CPU 15-1 writes the character codes of the standard image patterns which are the object of distance computation in either the first memory 15-2 or the second memory 15-3 in a manner described below. When the CPU 15-1 finishes computing the distance between one input image pattern and all of the standard image patterns and finishes writing the character codes in the first memory 15-2 or second memory 15-3, it reads the character codes out of the first memory 15-2 or second memory 15-3 in the order of the sizes of the computed distance values, e.g., in the order of increasing distance data (i.e., in the order in which the standard image patterns approximate the input image pattern) based on the contents stored in the first memory 15-2 and second memory 15-3, and then outputs the character codes to the CRT interface 6 via an interface 15-4.

Before describing the overall operation of the identification circuit 15, the principle of the sorting operation of the invention will be discussed based on Fig. 3.

Fig. 3 illustrates the address configurations of the first memory 15-2 and second memory 15-3 shown in Fig. 2. The sequence through which stored information is written and read is indicated by the arrows.

As shown in Fig. 3, the first memory 15-2 is such that numeric values which can be adopted as the results (distance data) of distance computation are assigned beforehand as addresses. In this example, the range of the results of distance computation is assumed to be "0" - "10".

When identical distance data occur in the distance data computed by the CPU 15-1, only the initially extracted identifier, i.e., in this example, only the character code of the standard pattern used in the initial computation, is stored in the first memory 15-2 at the address corresponding to the results of the distance computation. Character codes of standard image patterns from the second onward having the same distance data are stored in the second memory 15-3. The second memory 15-3 is such that character codes which can be adopted as identifiers are served beforehand as addresses. In this example, "0" - "15" are assigned as character codes.

Each time one character is identified at the time of character identification, the storage areas of the first memory 15-2 and second memory 15-3 are cleared and "0" is written at each address as attribute information indicating that there is no stored information.

By way of example, assume that "5" is obtained as distance data as the result of distance computation, and that "4", "6", "7" are successively extracted as character codes of the standard patterns for which the distance data is "5". The character code "4" extracted first is stored in the first memory 15-2 at address "5", then the character code "6" extracted second is stored in the second memory 15-3 at address "4" (which corresponds to the character code "4") (see arrow a). Next, the character code "7" extracted third is stored in the second memory 15-3 at address "6" (which corresponds to the character code "6") (see arrow b).

Thus, in sequence starting from the initially extracted character code stored in the first memory 15-2, extracted character codes are successively stored in the second memory 15-3, at addresses each of which is designated by the immediately preceding character code, in the order in which the character codes were extracted.

In Fig. 3, the character code of the standard pattern for which the result of distance computation is "6" is "2". In a case where there is no standard pattern having the same distance data "6", nothing is written at address "2" of the second memory 15-3, so that this data stored here remains "0", as shown in Fig. 3. In this way it can be understood that there is only one standard character pattern for which the distance data is "6".

Next, in a case where character codes are read in the order of the sizes of the results of distance computation, namely in the order of increasing distance data, the CPU 15-1 determines whether character codes (data other than "0") in data areas of the first memory 15-2 are stored in order starting from the smallest address "1" of the first memory 15-2. In the case of Fig. 3, it is detected that the character code "4" has initially been stored at address "5". When this is done, the next character code is read out of the second memory 15-3 using the character code "4" as the address, then the next character-code is read out of the data area of the second memory 15-3 using the abovementioned read character code as the address. This processing is executed repeatedly.

When the result of a reading operation is "0", this indicates that there is no character code to be read out next. Therefore, in Fig. 3, character codes "4", "6" and "7" can be read out in the order of arrows a → b → c. When the data at address "7" is detected to be "0", the checking processing shifts to the next address of the first memory 15-2. Here the character codes "4", "6", "7" are recognized as being codes having the same distance data "5".

Next, the second smallest distance data "6" is obtained as the result of distance computation. After the character code "2" of the corresponding standard pattern is extracted at the first memory 15-2, the address "2" of the second memory 15-3 is searched. Here, since the address "2" of the second memory 15-3 is "0", it is judged that there is no character code following the character code "2" that has the same distance data; hence, the content of address "7" of the first memory 15-2 is checked next.

Sorting processing according to the present embodiment based on the foregoing sorting principle will now be described with reference to the flowcharts of Figs. 4 and 5.

Fig. 4 is a flowchart illustrating a control procedure for computing distance data and for writing character codes corresponding to the distance data in the first and second memories 15-2, 15-3. This is a control procedure executed by the CPU 15-1 based on the control program stored in the program memory (PMEM).

Fig. 5 is a flowchart illustrating a control procedure for reading character codes out of the first memory 15-2 and second memory 15-3 in the order of sorting. This control program is stored in the program memory (PMEM).

In Fig. 4, when the input image pattern of one character read by the scanner 1 (see Fig. 6) enters via the image memory 3 at step S1, the CPU 15-1 clears the first memory 15-2 and second memory 15-3, reads the first standard image pattern, e.g., the standard image pattern of character "A" (for which the character code is "1" in this example) out of the dictionary memory 5-1 at step S3, and performs a distance computation at step S3 to determine the distance between the standard pattern of character "A" and the input image pattern. This distance computation method is well known in the art and therefore is not described here.

Next, the CPU 15-1 accesses the first memory 15-2 using the result of distance computation (distance data) as an address. When the read address (distance data) of the first memory 15-2 is assumed to be "10", for example, and it is verified that the data area at address "10" is "0" at step S4, the CPU 15-1 stores the character code "1" corresponding to the character "A" in the memory area of address "10" (see Fig. 3) at step S8 and ends the first distance computation.

Next, the program proceeds to step S9, at which the CPU 15-1 updates the read address of the dictionary memory 5-1. If all distance computations have not ended ("NO" at step S10), the CPU 15-1 reads the next standard pattern, e.g., character "B" (for which the character code is assumed to be "2") out of the dictionary memory 5-1 at step S2, then computes the distance between the same input image pattern and the standard pattern for character "B" at step S3 in the same manner as the distance was computed with regard to the standard pattern for character "A".

When, say, the computed value "6" is obtained as a result, the CPU 15-1 writes the character code "2" of character "B" at the address "6" of the first memory 15-2 through a procedure similar to that described above.

Thereafter, the CPU 15-1 successively executes distance computations for computing the distance between each of the standard patterns and the first input pattern and successively writes the character codes of the standard patterns which were the object of distance computation in the first memory 15-2. Here only character codes for which the distance data is "10" or less are written.

Next, when the same result of distance computation, e.g., distance data "5", occurs in the distance computation involving the standard image pattern of the character whose character code is "6", the CPU 15-1 recognizes, at step S4, the fact that a plurality of character codes having the same distance data have been detected, this resulting from the fact that the character code "4" has already been stored at address "5" of the first memory 15-2. Accordingly, the program proceeds from step S4 to step S5. The CPU 15-1 sets the character code ("4" in the example of Fig. 3), written at address "5" of the first memory 15-2, as the read address of the second memory 15-3, and reads out the data at this set address. When the CPU 15-1 detects that the value is "0", namely that this is the final data of the character codes, at step S5, it stores the character code "6" at address "4" of the second memory 15-3 at step S7.

Thereafter, when the same distance data "5" is obtained even in the case of character code "7", the CPU read from the address "4" of the second memory 15-3. Since the character code "6" will have been stored at this address, the program proceeds from step S5 to step S6, so that the value of the next address "6" is read out based on the above-described procedure. Here the value of address "6" is "0". Therefore, the program proceeds to step S7, so that the character code "7" is stored at address "6" of the second memory 15-3.

Thus, the foregoing procedure is successively repeated until the end of processing for computing the distance data regarding the last standard pattern in dictionary memory 5-1 and for storing the results of these computation. When this processing is terminated, the present control procedure for writing data ends (step S10).

This is followed by execution of the control procedure of Fig. 5 for reading out data performed by the CPU 15-1.

The CPU 15-1 sets the read address of the first memory 15-2 to "1" as an initial value at step S11 and then reads a character code out of the first memory 15-2 at step S12. If a character code has not been stored, i.e., if the result of the read-out operation at step S12 is "0" ("NO" at step S13), the read address of the first memory 15-2 is updated at step S14 on the grounds that there is no character code having the corresponding distance data. The program then proceeds from step S14 back to step S12.

In the case of this example, the character code "4" having the distance data "5" is read out at the moment the read address of the first memory 15-2 becomes "5" (see Fig. 3), and the character code "4" is outputted by the identification circuit 15. The character of this character code "4" is displayed on the CRT display unit 7 as a first character recognition candidate with regard to the input character pattern. This processing is executed at steps S13, S15 and S16.

Based on the above-described processing, the character code "7" is read out of the second memory 15-3 following the character code "6" having the same distance data as that of the character code "4", and the character of this character code is displayed on the CRT display unit 7 in the manner described above. This processing is executed at steps S17, S18, S16, S17.

This procedure is successively repeated so that the CPU 15-1 successively outputs and displays character codes regarding one input image pattern on the CRT display unit 7 in the order of the candidates (i.e., the order in which the characters of the character codes approximate the input image pattern). When all of the character codes for which the distance data is less than "10", by way of example, are thus outputted and displayed, the CPU 15-1 accepts the next input image pattern from the scanner 1 and repeats the character recognition procedure described above.

It should be noted that it is permissible to adopt an arrangement in which all character codes or character patterns which are recognition candidates with regard to one input image pattern are displayed in the order of the candidates. If it is desired to raise the recognition speed, an arrangement can be adopted in which the distance data is provided with a threshold value and only character candidates having distance data smaller than the threshold value are outputted. In such case, it will suffice if the addresses of the first memory 15-2 are set from "1" to the threshold value.

In the present embodiment, an example has been described in which the invention is applied to a character recognition apparatus. However, the invention can be applied also to a sorting circuit for sorting and outputting, say, test scores and the names of students in the order of the scores, and to an apparatus in which numeral data and identification codes corresponding to the numeral data are sorted in the order of size.

Further, in the present embodiment, the address configurations of the dictionary memory 5-1 and the second memory 15-3 are such that accessing is performed by character code. This makes it possible to arrange the addresses in the same memory space. If the dictionary memory 5-1 and second memory 15-3 are integrated by making use of this feature, it will suffice to set the read addresses only once. This makes it possible to raise the speed of the sorting and the character recognition.

For the sake of reference, the memory capacity of the conventional sorting circuit and the memory capacity of the present embodiment will be compared. For example, assume that there are ten values which can be adopted as computed distance values and that there are 15 character codes. In such case, the memory capacity required in the prior-art example would be that needed to store 10 x 15 = 150 items of data. By contrast, it will suffice if the memory capacity in the present embodiment is large enough to store 10 + 15 = 25 items of data. Since the number of character codes in an actual character recognition apparatus is on the order of several hundred to several thousand, the effectiveness of the invention is enormous in terms of reducing required memory capacity.

Since the present embodiment thus makes it possible to greatly reduce required memory capacity in comparison with the prior art, the apparatus can be lowered in cost. In addition, since there are fewer items of data to be written and read, character recognition speed is raised.

## Claims

1. A sorting method for sorting identification codes having associated numeric information in accordance with the numeric information, said method being characterised in that it comprises the steps of: for each input identification codes and associated numeric information:
(A) reading a first data from a first memory (200, 15-2) at a first address corresponding to the input numeric information;
(B) storing the identification code in the first memory (200, 15-2) at the first address when the first data is equal to 0;
(C) reading a second data from a second memory (300, 15-3) at a second address corresponding to the first data when the first data is not equal to 0;
(D) storing the identification code in the second memory (300, 15-3) at the second address when the second data is equal to 0;
(E) reading data from the second memory (300, 15-3) at an address corresponding to the immediately preceding read data from the second memory when the read data is not equal to 0;
(F) repeating the step (E) until the read data is found to be equal to 0; and
(G) storing the identification code in the second memory (300, 15-3) at an address corresponding to the read data.

2. A method according to claim 1, characterised in that said first memory has an address space corresponding to said numeric information, and said second memory has an address space corresponding to said identification codes.

3. A method according to claim 1 and characterised by the further steps of:
when all of the identification codes have been input and stored in either of the first memory (200, 15-2) or the second memory (300, 15-3),
(H) reading a third data from the first memory (200, 15-2) in order of the stored addresses; and for each of the third data read from the first memory (200, 15-2);
(I) outputting the third data and reading a fourth data from the second memory (300, 15-3) at the address corresponding to the third data when the third data is not equal to 0;
(J) outputting the fourth data and reading a data from the second memory (300, 15-3) at the address corresponding to the fourth data when the fourth data is not equal to 0;
(K) reading data from the second memory (300, 15-3) at an address corresponding to the immediately preceding read data from the second memory when the read data is not equal to 0;
(L) repeating the step (K) until the read data is found to be equal to 0 and outputting all of the data read in the step (K) except for the data found to be equal to 0; and
(M) repeating the steps (H) to (L) until all of the data stored in the first memory (300, 15-3) are read.

4. A sorting apparatus comprising:
input means (100, 15-4) for inputting identification codes and numeric information corresponding thereto; and
output means (15-4) for outputting identification codes in order of the numeric information corresponding thereto, and characterised by comprising:
memory control means for storing the identification codes in a first memory (200, 15-2) at addresses corresponding to the numeric information and
for storing the identification codes in a second memory (300, 15-3) at addresses corresponding to the identification codes;
access means (400, 500) for accessing data in said first memory at addresses corresponding to the input numeric information and for accessing data in said second memory at an address corresponding to the current read data;
discrimination means for discriminating whether a data read by said access means (400, 500) is equal to 0; and
control means whereby when said access means (400, 500) reads data from said first memory and said discrimination means determines that the data read is equal to 0, said access means writes the input identification code into said first memory (200, 15-2), when said discrimination means determines that the data read is not equal to 0,
said access means reads data from said second memory, said discrimination means discriminates the data read by said access means (400, 500) successively until the read data is discriminated to be equal to 0, said access means (400, 500) then writing the input identification code in said second memory (300, 15-3) at the address where the stored data is discriminated to be equal to 0.

5. Sorting apparatus according to claim 4, characterised in that said first memory means has an address space corresponding to said numeric information, and said second memory means has an address space corresponding to said identification codes.

6. Sorting apparatus according to claim 4 or claim 5, wherein said control means is operative to control said access means such that when said discrimination means discriminates that data read by said access means from said first memory is not equal to 0, said output means (15-4) outputs the read data, and wherein said control means are also operative to control said access means such that when said discrimination means discriminates the data read from said second memory, said output means (15-4) outputs the read data successively, until the read data equals 0,
said access means reading data from a next address in said first memory when said discrimination means discriminates the read data to be equal to 0.

## Patentansprüche

1. Sortierverfahren zum Sortieren von Identifizierungscodes entsprechend numerischer Informationen, die den Identifizierungscodes zugehörig sind,
**gekennzeichnet durch** folgende Verfahrensschritte für jeden eingegebenen Indentifikationscode und jede zugehörige numerische Information:
(A) Lesen eines ersten Datums aus einem ersten Speicher (200, 15-2) unter einer ersten Adresse entsprechend der eingegebenen numerischen Information;
(B) Speichern des Indentifikationscodes im ersten Speicher (200, 15-2) unter der ersten Adresse, wenn das erste Datum gleich Null ist;
(C) Lesen eines zweiten Datums aus einem zweiten Speicher (300, 15-2) unter einer zweiten Adresse, die dem ersten Datum zugeordnet ist, wenn das erste Datum nicht gleich Null ist;
(D) Speichern des Indentifikationscodes im zweiten Speicher (300, 15-3) unter der zweiten Adresse, wenn das zweite Datum gleich Null ist;
(E) Lesen von Daten aus dem zweiten Speicher (300, 15-3) unter der zu dem unmittelbar zuvor gelesenen Datum aus dem zweiten Speicher gehörenden Adresse, wenn das gelesene Datum nicht gleich Null ist,
(F) Wiederholung des Schrittes (E), bis das gelesene Datum gefunden ist, das gleich Null ist, und durch den Verfahrensschritt
(G) Speichern des Identifikationscodes im zweiten Speicher (300, 15-3) unter der dem gelesenen Datum zugeordneten Adresse.

2. Verfahren nach Anspruch 1, dadurch gekennzeichnet, daß der erste Speicher einen Adressbereich hat, der der numerischen Information zugeordnet ist, und daß der zweite Speicher einen Adressbereich hat, der den Identifikationscodes zugeordnet ist.

3. Verfahren nach Anspruch 1, gekennzeichnet durch die weiteren Verfahrensschritte, bei denen vorausgesetzt wird, daß alle Identifikationscodes entweder im ersten Speicher (200, 15-2) oder im zweiten Speicher (300, 15-3) gespeichert sind:
(H) Lesen eines dritten Datums aus dem ersten Speicher (200, 15-2) in der Reihenfolge der gespeicherten Adressen; und für jedes dritte aus dem ersten Speicher (200, 15-2) gelesenen Datums;
(I) Ausgabe des dritten Datums und Lesen eines vierten Datums aus dem zweiten Speicher (300, 15-3) unter der dem dritten Datum zugeordneten Adresse, wenn das dritte Datum nicht gleich Null ist;
(J) Ausgabe des vierten Datums und Lesen eines Datums aus dem zweiten Speicher (300, 15-3) unter der dem vierten Datum zugeordneten Adresse, wenn das vierte Datum nicht gleich Null ist;
(K) Lesen von Daten aus dem zweiten Speicher (300, 15-3) unter einer Adresse, die dem unmittelbar zuvor aus dem zweiten Speicher gelesenen Datum zugeordnet ist, wenn das gelesene Datum nicht gleich Null ist;
(L) Wiederholung des Schrittes (K), bis das gelesene Datum, das gleich Null ist, gefunden worden ist, und Ausgabe aller der in Schritt (K) gelesenen Daten mit Ausnahme der gefundenen Daten, die gleich Null sind; und
(M) Wiederholung der Schritte (H) bis (L), bis alle in dem ersten Speicher (300, 15-3) gespeicherten Daten gelesen sind.

4. Sortiergerät mit:
einem Eingabemittel (100, 15-4) zur Eingabe von Identifikationscodes und diesen zugeordneten numerischen Informationen; und mit
einem Ausgabemittel (15-4) zur Ausgabe von Identifikationscodes in der Reihenfolge der diesen zugeordneten numerischen Informationen, **gekennzeichnet durch** folgende Mittel:
ein Speichersteuermittel zur Speicherung der Identifikationscodes in einem ersten Speicher (200, 15-2) unter den numerischen Informationen zugeordneten Adressen und zur
Speicherung der Identifikationscodes in einem zweiten Speicher (300, 15-3) unter den Identifikationscodes zugeordneten Adressen;
ein Zugriffsmittel (400, 500) zum Datenzugriff im ersten Speicher unter Adressen, die den eingegebenen numerischen Informationen zugeordnet sind, und zum Datenzugriff im zweiten Speicher unter Adressen, die den laufend gelesenen Daten zugeordnet sind;
ein Selektiermittel zum Herausfinden, ob ein von dem Zugriffsmittel (400, 500) gelesenes Datum gleich Null ist; und ein Steuermittel, durch das bestimmt wird, daß das gelesene Datum gleich Null ist; und
ein Steuermittel, wodurch das Zugriffsmittel den Eingangsidentifikationen in den ersten Speicher (200, 15-2) einschreibt, wenn das Zugriffsmittel (400, 500) Daten aus dem ersten Speicher liest und das Selektiermittel bestimmt, daß das gelesene Datum gleich Null ist, wobei das Zugriffsmittel den Eingangsidentifikationscode in den ersten Speicher schreibt, wenn das Selektiermittel bestimmt, daß das gelesene Datum nicht gleich Null ist,
wobei das Zugriffsmittel Daten aus dem zweiten Speicher liest, wobei das Selektiermittel die von dem Zugriffsmittel (400, 500) nacheinander gelesenen Daten ausliest, bis das gelesene Datum selektiert ist, das gleich Null ist, wobei das Zugriffsmittel (400, 500) dann den Eingangsidentifikationscode in den zweiten Speicher (300, 15-3) unter der Adresse einschreibt, unter der das gespeicherte Datum gelesen worden ist, das gleich Null ist.

5. Sortigerät nach Anspruch 4, **dadurch gekennzeichnet,** daß das erste Speichermittel einen Adressbereich aufweist, der der numerischen Information zugeordnet ist, und daß das zweite Speichermittel einen Adressbereich aufweist, der den Identifikationscodes zugeordnet ist.

6. Sotiergerät nach Anspruch 4 oder 5, dessen Steuermittel zur Steuerung des Zugriffsmittels in der Weise betriebsbereit ist, daß das Ausgabemittel (15-4) das gelesene Datum ausgibt, wenn das Selektiermittel herausfindet, daß von dem Zugriffsmittel Zugriffsmittels in der Weise betriebsbereit ist, daß das Ausgabemittel (15-4) die ausgelesenen Daten aufeinanderfolgend solange ausgibt, bis das gelesene Datum gleich Null ist, wenn das Selektiermittel herausfindet, daß die Daten aus dem zweiten Speicher gelesen sind,
wobei das Zugriffsmittel Daten aus einer nächsten Adresse in dem ersten Speicher liest, wenn das Selektiermittel das gelesene Datum herausfindet, das gleich Null ist.

## Revendications

1. Procédé de tri pour trier des codes d'identification ayant une information numérique associée, conformément à l'information numérique, ledit procédé étant caractérisé en ce qu'il comprend les étapes suivantes: pour chacun des codes d'identification introduit et l'information numérique associée:
(A) lecture de premières données à partir d'une première mémoire (200, 15-2) à une première adresse correspondant à l'information numérique introduite;
(B) stockage du code d'identification dans la première mémoire (200, 15-2) à la première adresse lorsque les premières données sont égales à 0;
(C) lecture de secondes données à partir d'une seconde mémoire (300, 15-3) à une seconde adresse correspondant aux premières données lorsque les premières données ne sont pas égales à 0;
(D) stockage du code d'identification dans la seconde mémoire (300, 15-3) à la seconde adresse lorsque les secondes données sont égales à 0;
(E) lecture des données à partir de la seconde mémoire (300, 15-3) à une adresse correspondant aux données lues immédiatement précédentes, à partir de la seconde mémoire, lorsque les données lues ne sont pas égales à 0;
(F) répétition de l'étape (E) jusqu'à ce que les données lues soient trouvées égales à 0; et
(G) stockage du code d'identification dans la seconde mémoire (300, 15-3) à une adresse correspondant aux données lues.

2. Procédé selon la revendication 1, caractérisé en ce que ladite première mémoire a un espace d'adresse correspondant à ladite information numérique, et ladite seconde mémoire a un espace d'adresse correspondant auxdits codes d'identification.

3. Procédé selon la revendication 1 et caractérisé par les étapes supplémentaires suivantes:
lorsque tous les codes d'identification ont été introduits et stockés dans l'une ou l'autre de la première mémoire (200, 15-2) ou de la seconde mémoire (300, 15-3),
(H) lecture de troisièmes données à partir de la première mémoire (200, 15-2) dans l'ordre des adresses stockées; et pour chacune des troisièmes données lues à partir de la première mémoire (200, 15-2);
(I) délivrance des troisièmes données et lecture de quatrièmes données à partir de la seconde mémoire (300, 15-3) à l'adresse correspondant aux troisièmes données lorsque les troisièmes données ne sont pas égales à 0;
(J) délivrance des quatrièmes données et lecture de données à partir de la seconde mémoire (300, 15-3) à l'adresse correspondant aux quatrièmes données lorsque les quatrièmes données ne sont pas égales à 0;
(K) lecture de données à partir de la seconde mémoire (300, 15-3) à une adresse correspondant aux données lues immédiatement précédentes, à partir de la seconde mémoire, lorsque les données lues ne sont pas égales à 0;
(L) répétition de l'étape (K) jusqu'à ce que les données lues soient trouvées égales à 0 et délivrance de toutes les données lues au cours de l'étape (K) sauf pour les données trouvées égales à 0; et
(M) répétition des étapes (H) à (L) jusqu'à ce que toutes les données stockées dans la première mémoire (300, 15-3) soient lues.

4. Appareil de tri comprenant:
des moyens d'introduction (100, 15-4) pour introduire des codes d'identification et une information numérique correspondant à ceux-ci; et
des moyens de sortie (15-4) pour délivrer des codes d'identification dans l'ordre de l'information numérique correspondant à ceux-ci, et caractérisé en ce qu'il comprend:
un moyen de commande de mémoire pour stocker les codes d'identification dans une première mémoire (200, 15-2) aux adresses correspondant à l'information numérique et
pour stocker les codes d'identification dans une seconde mémoire (300, 15-3) aux adresses correspondant aux codes d'identification;
des moyens d'accès (400, 500) pour accéder à des données dans ladite première mémoire aux adresses correspondant à l'information numérique introduite et pour accéder aux données dans ladite seconde mémoire à une adresse correspondant aux données en cours de lecture;
un moyen de discrimination pour discriminer si les données lues par lesdits moyens d'accès (400, 500) sont égales à 0; et
un moyen de commande grâce auquel, lorsque lesdits moyens d'accès (400, 500) lisent les données à partir de la première mémoire et ledit moyen de discrimination détermine que les données lues sont égales à 0, lesdits moyens d'accès écrivent le code d'identification introduit dans ladite première mémoire (200, 15-2), lorsque ledit moyen de discrimination détermine que les données lues ne sont pas égales à 0, lesdits moyens d'accès lisent les données à partir de ladite seconde mémoire, ledit moyen de discrimination discrimine les données lues par lesdits moyens d'accès (400, 500) successivement jusqu'à ce que les données lues soient discriminées pour être égales à 0, lesdits moyens d'accès (400, 500) écrivant ensuite le code d'identification introduit dans ladite seconde mémoire (300, 15-3) à l'adresse où les données stockées sont discriminées pour être égales à 0.

5. Appareil de tri selon la revendication 4, caractérisé en ce que ledit premier moyen formant mémoire a un espace d'adresse correspondant à ladite information numérique, et ledit second moyen formant mémoire a un espace d'adresse correspondant auxdits codes d'identification.

6. Appareil de tri selon la revendication 4 ou la revendication 5, dans lequel ledit moyen de commande fonctionne pour commander lesdits moyens d'accès de telle sorte que lorsque ledit moyen de discrimination discrimine que les données lues par lesdits moyens d'accès à partir de ladite première mémoire ne sont pas égales à 0, lesdits moyens de sortie (15-4) délivrent les données lues, et dans lequel ledit moyen de commande fonctionne aussi pour commander lesdits moyens d'accès de telle sorte que lorsque ledit moyen de discrimination discrimine les données lues à partir de ladite seconde mémoire, lesdits moyens de sortie (15-4) délivrent les données lues successivement, jusqu'à ce que les données lues soient égales à 0,
lesdits moyens d'accès lisant les données à partir d'une adresse suivante dans ladite première mémoire lorsque ledit moyen de discrimination discrimine les données lues comme étant égales à 0.
